(19) Europäisches Patentamt / European Patent Office / Office européen des brevets

(11) **EP 3 001 555 A2**

(12) **EUROPEAN PATENT APPLICATION**

(43) Date of publication:
**30.03.2016 Bulletin 2016/13**

(51) Int Cl.:
**H02M 5/297** *(2006.01)*

(21) Application number: **15185796.8**

(22) Date of filing: **18.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **25.09.2014 JP 2014195851**

(71) Applicant: **Kabushiki Kaisha Yaskawa Denki Kitakyushu-shi, Fukuoka 806-0004 (JP)**

(72) Inventors:
• **YAMAZAKI, Akira**
  **Kitakyushu-shi, Fukuoka 806-0004 (JP)**
• **EBISU, Joji**
  **Kitakyushu-shi, Fukuoka 806-0004 (JP)**

(74) Representative: **Viering, Jentschura & Partner mbB**
**Patent- und Rechtsanwälte**
**Grillparzerstrasse 14**
**81675 München (DE)**

(54) **MATRIX CONVERTOR, POWER GENERATION SYSTEM, AND METHOD FOR CONVERTING POWER**

(57)    A matrix convertor includes a power convertor, a commutation controller, an error compensator, and a compensation amount adjustor. The power convertor is disposed between input phases and output phases. The power convertor includes a plurality of bidirectional switches each including a plurality of switching elements. The commutation controller is configured to perform commutation control with respect to the plurality of switching elements of each of the plurality of bidirectional switches using a commutation pattern including a plurality of steps so as to switch connection between the input phases and the output phases through the power convertor. The error compensator is configured to calculate a compensation amount to decrease an error in an output voltage caused by the commutation control. The compensation amount adjustor is configured to decrease the compensation amount based on at least one voltage among voltages of the output phases.

**FIG. 1**

**Description**

BACKGROUND

FIELD OF THE INVENTION

The present invention relates to a matrix convertor, a power generation system, and a method for converting power.

DISCUSSION OF THE BACKGROUND

Japanese Unexamined Patent Application Publication No. 2004-7929 and Japanese Unexamined Patent Application Publication No. 2007-82286 each disclose a matrix convertor that includes a plurality of bidirectional switches to connect input phases to output phases. The matrix convertor controls the bidirectional switches to directly switch the voltages of the input phases so as to output desired voltages and frequencies to the output phases. When the matrix convertor is connected between a power system and a power generator, the input phases are, for example, the R phase, the S phase, and the T phase of the power system, and the output phases are, for example, the U phase, the V phase, and the W phase of the power generator.

In switching the input phases to be connected to the output phases using the bidirectional switches, the matrix convertor performs commutation control. An example of the commutation control is to individually control a plurality of switching elements to be turned on and off in a predetermined order. Although the commutation control prevents short-circuiting between the input phases and prevents the output phases from going into open state, an error may be generated in the output voltage. In view of this, Japanese Unexamined Patent Application Publication No. 2004-7929 and Japanese Unexamined Patent Application Publication No. 2007-82286 suggest techniques of compensating for the error in the output voltage.

The contents of Japanese Unexamined Patent Application Publication No. 2004-7929 and Japanese Unexamined Patent Application Publication No. 2007-82286 are incorporated herein by reference in their entirety.

The error in the output voltage caused by the commutation control may receive overcompensation. The overcompensation may unfortunately degrade the output property of the matrix convertor.

An aspect of an embodiment has been made in view of the above-described circumferences. It is an object of the present disclosure to provide a matrix convertor, a power generation system, and a method for converting power that eliminate or minimize degradation of the output property of the matrix convertor.

SUMMARY

According to one aspect of the present disclosure, a matrix convertor includes a power convertor, a commutation controller, an error compensator, and a compensation amount adjustor. The power convertor is disposed between a plurality of input phases and a plurality of output phases switchably connected to the plurality of input phases. The power convertor includes a plurality of bidirectional switches each including a plurality of switching elements. The commutation controller is configured to perform commutation control with respect to the plurality of switching elements of each of the plurality of bidirectional switches using a commutation pattern including a plurality of steps so as to switch connection between the plurality of input phases and the plurality of output phases through the power convertor. The error compensator is configured to calculate a compensation amount to decrease an error in an output voltage caused by the commutation control. The compensation amount adjustor is configured to decrease the compensation amount based on at least one voltage among voltages of the plurality of output phases.

The aspect of the embodiment provides a matrix convertor, a power generation system, and a method for converting power that eliminate or minimize degradation of the output property of the matrix convertor.

BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:

FIG. 1 is a diagram illustrating an exemplary configuration of a matrix convertor according to an embodiment;
FIG. 2 is a diagram illustrating an exemplary configuration of a bidirectional switch illustrated in FIG. 1;
FIG. 3 is a diagram illustrating an exemplary configuration of a controller illustrated in FIG. 1;
FIG. 4 illustrates graphs of ON-OFF transitions of switching elements in a case where $Io > 0$ in four-step current commutation;

FIG. 5 illustrates a graph of a PWM control command, an output phase voltage, and a carrier wave in relation to each other in a case where $Io > 0$ in the four-step current commutation;

FIG. 6 illustrates graphs of ON-OFF transitions of switching elements in a case where $Io < 0$ in the four-step current commutation;

FIG. 7 illustrates a graph of the PWM control command, the output phase voltage, and the carrier wave in relation to each other in a case where $Io < 0$ in the four-step current commutation;

FIG. 8 is a diagram illustrating exemplary output voltage space vectors;

FIG. 9 is a diagram illustrating an example of correspondence between an output voltage command and space vectors;

FIG. 10 illustrates a graph of a range within which a compensation amount is decreased;

FIG. 11 is a diagram illustrating an exemplary configuration of a compensation amount adjustor;

FIG. 12 illustrates a graph of an intermediate output phase voltage and an adjustment gain in relation to each other;

FIG. 13 is a diagram illustrating another exemplary configuration of the controller illustrated in FIG. 1; and

FIG. 14 is a flowchart of exemplary power conversion processing performed by the controller.

## DESCRIPTION OF THE EMBODIMENTS

A matrix convertor, a power generation system, and a method for converting power according to embodiments will be described in detail below with reference to the accompanying drawings. The following embodiments are provided for exemplary purposes only and are not intended to limit the present disclosure. 1. Configuration of Matrix Convertor

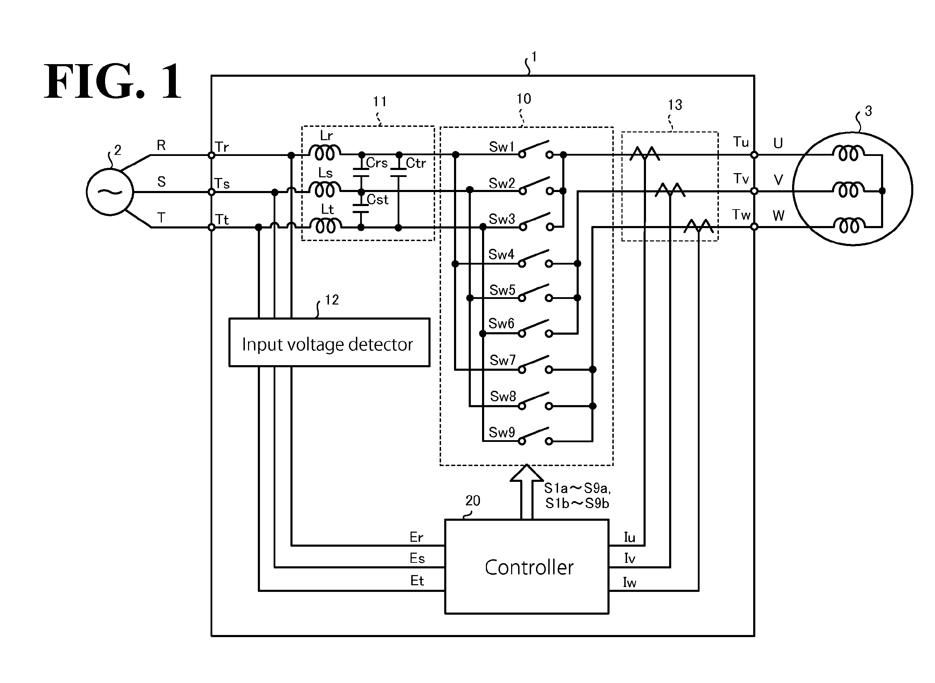

FIG. 1 is a diagram illustrating an exemplary configuration of a matrix convertor according to an embodiment. As illustrated in FIG. 1, the matrix convertor 1 according to this embodiment is disposed between the R phase, the S phase, and the T phase (which are examples of the plurality of input phases) of a three-phase alternating-current (AC) power source 2 (hereinafter referred to as "AC power source 2") and the U phase, the V phase, and the W phase (which are examples of the output phases) of an AC device 3. A non-limiting example of the AC power source 2 is a power system. Examples of the AC device 3 include, but are not limited to, rotating electric machines such as AC motors and AC generators.

When the AC power source 2 is a power system and the AC device 3 is an AC generator (which is an example of the power generator), for example, the matrix convertor 1 outputs power generated by the AC device 3 to the AC power source 2. In this case, the matrix convertor 1 and the AC device 3 constitute a power generation system. Alternatively, when the AC power source 2 is a power system and the AC device 3 is an AC motor, the matrix convertor 1 controls the AC device 3 based on power supplied from the AC power source 2.

The matrix convertor 1 includes input terminals Tr, Ts, and Tt, output terminals Tu, Tv, and Tw, a power convertor 10, an LC filter 11, an input voltage detector 12, an output current detector 13, and a controller 20 (which is an example of the controller). A three-phase AC voltage is supplied from the AC power source 2 through the input terminals Tr, Ts, and Tt. The matrix convertor 1 converts the three-phase AC voltage into a desired voltage and frequency, and outputs the voltage and frequency to the AC device 3 through the output terminals Tu, Tv, and Tw.

The power convertor 10 includes a plurality of bidirectional switches Sw1 to Sw9 (hereinafter occasionally referred to as bidirectional switches Sw collectively). The bidirectional switches Sw1 to Sw9 connect each phase of the AC power source 2 and each phase of the AC device 3 to each other.

The bidirectional switches Sw1 to Sw3 respectively connect the R phase, the S phase, and the T phase of the AC power source 2 to the U phase of the AC device 3. The bidirectional switches Sw4 to Sw6 respectively connect the R phase, the S phase, and the T phase of the AC power source 2 to the V phase of the AC device 3. The bidirectional switches Sw7 to Sw9 respectively connect the R phase, the S phase, and the T phase of the AC power source 2 to the W phase of the AC device 3.

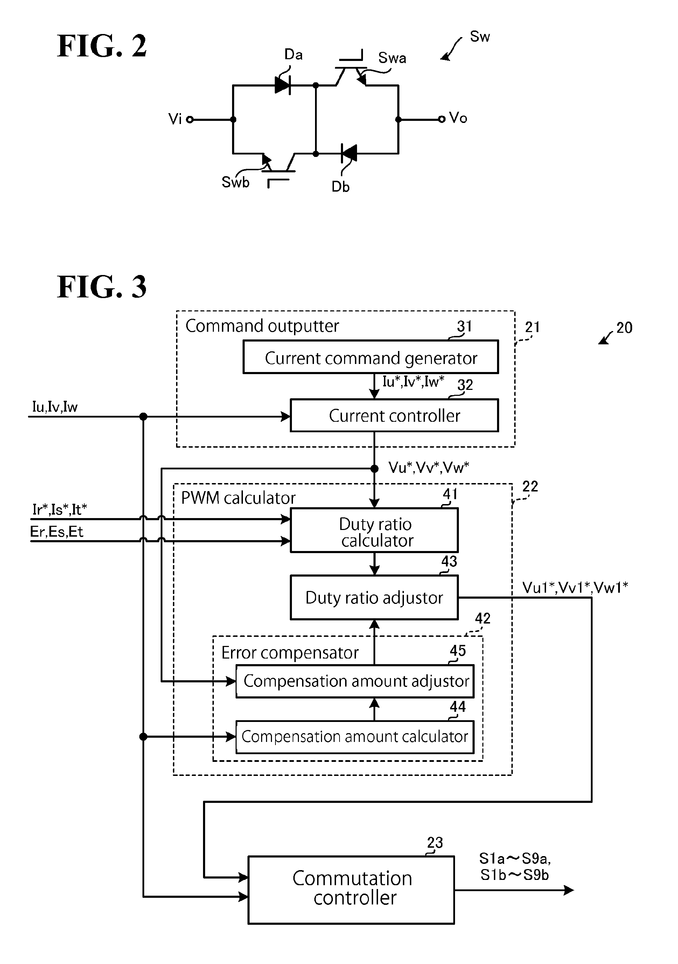

FIG. 2 is a diagram illustrating an exemplary configuration of the bidirectional switch Sw. As illustrated in FIG. 2, the bidirectional switch Sw includes: a series connection circuit of a switching element Swa and a diode Da; and a series connection circuit of a switching element Swb and a diode Db. These series connection circuits are oriented in opposite directions and connected in parallel to each other. In FIG. 2, input phase voltage is indicated as $Vi$, and output phase voltage is indicated as $Vo$.

The bidirectional switch Sw will not be limited to the configuration illustrated in FIG. 2; it suffices that the bidirectional switch Sw includes a plurality of switching elements and controls the conduction direction. In the example illustrated in FIG. 2, the cathodes of the diodes Da and Db are connected to each other. The bidirectional switch Sw, however, may have a configuration in which the cathodes of the diodes Da and Db are not connected to each other.

Examples of the switching elements Swa and Swb (hereinafter occasionally referred to as switching elements Swab collectively) include semiconductor switching elements such as metal-oxide-semiconductor field-effect transistors (MOSFETs) and insulated gate bipolar transistors (IGBTs). Other examples of the switching elements Swa and Swb include next-generation semiconductor switching elements such as SiC and GaN. It is noted that when the switching elements Swa and Swb are reverse blocking IGBTs, there is no need for providing the diodes Da and Db.

Referring back to FIG. 1, the matrix convertor 1 will be further described. The LC filter 11 is disposed between the power convertor 10 and the R phase, the S phase, and the T phase of the AC power source 2. The LC filter 11 includes three reactors Lr, Ls, and Lt and three capacitors Crs, Cst, and Ctr, and removes high-frequency components caused by switching of the bidirectional switches Sw.

The input voltage detector 12 detects the voltage of each of the R phase, the S phase, and the T phase of the AC power source 2. For example, the input voltage detector 12 detects instantaneous values $Er$, $Es$, and $Et$ of the respective voltages of the R phase, the S phase, and the T phase of the AC power source 2 (the instantaneous values will be hereinafter referred to as input phase voltages $Er$, $Es$, and $Et$).

The output current detector 13 detects a current flowing between the power convertor 10 and the AC device 3. For example, the output current detector 13 detects instantaneous values $Iu$, $Iv$, and $Iw$ of currents respectively flowing between the power convertor 10 and the $U$ phase, the $V$ phase, and the $W$ phase of the AC device 3 (hereinafter referred to as output phase currents $Iu$, $Iv$, and $Iw$). In the following description, the output phase currents $Iu$, $Iv$, and $Iw$ will be occasionally referred to as output phase currents $Io$ collectively.

Based on values including the input phase voltages $Er$, $Es$, and $Et$ and the output phase currents $Iu$, $Iv$, and $Iw$, the controller 20 generates drive signals $S1a$ to $S9a$ and $51b$ to $S9b$ (hereinafter occasionally referred to as drive signals $Sg$ collectively) to control the bidirectional switches Sw1 to Sw9 of the power convertor 10.

For example, the switching elements Swa of the bidirectional switches Sw1 to Sw9 are respectively driven by the drive signal $S1a$ to $S9a$, and the switching elements Swb of the bidirectional switches Sw1 to Sw9 are respectively driven by the drive signals $51b$ to $S9b$.

2. Configuration of Controller 20

FIG. 3 is a diagram illustrating an exemplary configuration of the controller 20. As illustrated in FIG. 3, the controller 20 includes a command outputter 21, a PWM calculator 22, and a commutation controller 23.

The controller 20 includes a microcomputer and various circuits. The microcomputer includes a central processing unit (CPU), a read only memory (ROM), a random access memory (RAM), and input-output ports. The CPU of the microcomputer reads a program stored in the ROM and executes the program so as to function as the command outputter 21, the PWM calculator 22, and the commutation controller 23. It is noted that the controller 20 may be made up of hardware alone, without any programs.

The command outputter 21 generates and outputs output voltage commands $Vu^*$, $Vv^*$, and $Vw^*$ of the respective output phases at predetermined control intervals. The command outputter 21 includes a current command generator 31 and a current controller 32.

The current command generator 31 generates output current commands $Iu^*$, $Iv^*$, and $Iw^*$ based on, for example, a frequency command $f^*$. The current command generator 31 may generate the output current commands $Iu^*$, $Iv^*$, and $Iw^*$ based on a torque command $T^*$, instead of the frequency command $f^*$.

Based on the output current commands $Iu^*$, $Iv^*$, and $Iw^*$, and based on the output phase currents $Iu$, $Iv$, and $Iw$, the current controller 32 generates and outputs the output voltage commands $Vu^*$, $Vv^*$, and $Vw^*$ of the respective output phases at predetermined control intervals. For example, for the $U$ phase, the current controller 32 performs proportional integral (PI) control to make the difference between the output current command $Iu^*$ and the output phase current $Iu$ zero, so as to generate the output voltage command $Vu^*$. Similarly, for the $V$ phase and the $W$ phase, the current controller 32 performs the PI control, for example, to generate the output voltage commands $Vv^*$ and $Vw^*$.

Based on the output voltage commands $Vu^*$, $Vv^*$, and $Vw^*$, the PWM calculator 22 generates PWM control commands $Vu1^*$, $Vv1^*$, and $Vw1^*$ (hereinafter occasionally referred to as PWM control commands $Vo1^*$ collectively) to specify a duty ratio for pulse width modulation (PWM) control. The PWM calculator 22 outputs the PWM control commands $Vo1^*$ to the commutation controller 23.

When the PWM control commands $Vo1^*$ are changed, the commutation controller 23 performs commutation control processing of a commutation pattern including two or more steps to generate drive signals $Sg$. Thus, the switching elements Swab constituting the bidirectional switches Sw are individually switched in a predetermined order to eliminate or minimize a line-to-line short-circuiting of the AC power source 2 and output opening of the matrix convertor 1. The commutation controller 23 and the PWM calculator 22 will be described in more detail in this order below.

3. Commutation Controller 23

Examples of the commutation performed by the commutation controller 23 include, but are not limited to, current commutation and voltage commutation. The current commutation is a method of commutation performed for each output phase in a commutation pattern that accords with the polarity of the output phase current $Io$.

Thus, the switching elements Swab constituting the bidirectional switch Sw are individually switched on and off in a predetermined order. This configuration eliminates or minimizes line-to-line short-circuiting in the AC power source 2, and eliminates or minimizes opening of the output phases of the matrix convertor 1. Four-step current commutation will be described below as an example of the current commutation performed by the commutation controller 23.

In order to prevent line-to-line short-circuiting and prevent opening of the output phases, the commutation control using the four-step current commutation is based on a commutation pattern that accords with the polarity of the output phase current $Io$. The commutation pattern includes the following first to fourth steps:

Step 1: Among the switching elements Swab constituting the bidirectional switches Sw in the switching source, turn OFF a switching element whose conduction direction has an opposite polarity to the polarity of the output phase current $Io$;

Step 2: Among the switching elements Swab constituting the bidirectional switches Sw in the switching destination, turn ON a switching element whose conduction direction has the same polarity as the polarity of the output phase current $Io$;

Step 3: Among the switching elements Swab constituting the bidirectional switches Sw in the switching source, turn OFF a switching element whose conduction direction has the same polarity as the polarity of the output phase current $Io$; and

Step 4: Among the switching elements Swab constituting the bidirectional switches Sw in the switching destination, turn ON a switching element whose conduction direction has an opposite polarity to the polarity of the output phase current $Io$.

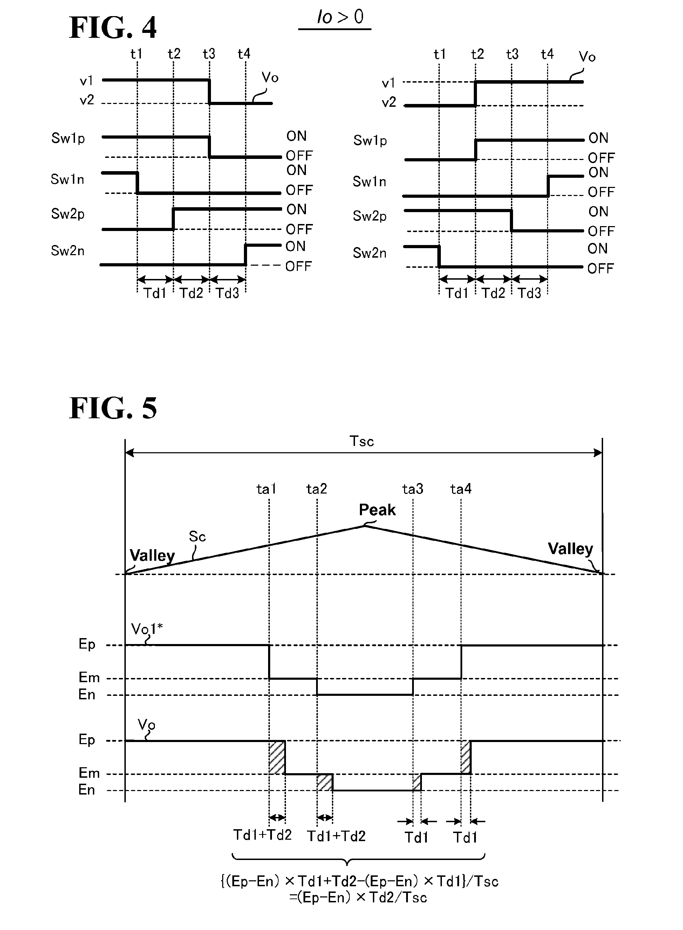

FIG. 4 illustrates graphs of ON-OFF transitions of switching elements in a case where $Io > 0$ in the four-step current commutation. Switching elements Sw1p and Sw1n are respectively switching elements Swa and Swb of a bidirectional switch Sw connected to an input phase voltage $v1$. Switching elements Sw2p and Sw2n are respectively switching elements Swa and Swb of a bidirectional switch Sw connected to an input phase voltage $v2$. The voltages $v1$ and $v2$ are the input phase voltages $Vi$ and in the relationship: $v1 > v2$.

As illustrated in FIG. 4, in the case where $Io > 0$ and the input phase voltage $Vi$ changes from $v1$ to $v2$, the output phase voltage $Vo$ changes at the timing (timing $t3$) of the third step. Alternatively, in the case where $Io > 0$ and the input phase voltage $Vi$ changes from $v2$ to $v1$, the output phase voltage $Vo$ changes at the timing (timing $t2$) of the second step.

FIG. 5 illustrates a graph of the PWM control command $Vo1^*$, the output phase voltage $Vo$, and a carrier wave Sc in relation to each other in a case where $Io > 0$ in the four-step current commutation. As illustrated in FIG. 5, the output phase voltage $Vo$ does not change at the switching timing of the input phase voltage $Vi$ specified by the PWM control command $Vo1^*$.

Specifically, as illustrated in FIG. 5, the output phase voltage $Vo$ changes at the timing ($Td1 + Td2$) of the third step past timing $ta1$ and timing $ta2$. The output phase voltage $Vo$ changes at the timing ($Td1$) of the second step past timing $ta3$ and timing $ta4$. Consequently, in one cycle $Tsc$ of the carrier wave Sc, an error ($Ep - En$) x $Td2 / Tsc$ is generated in the output phase voltage $Vo$ with respect to the PWM control command $Vo1^*$.

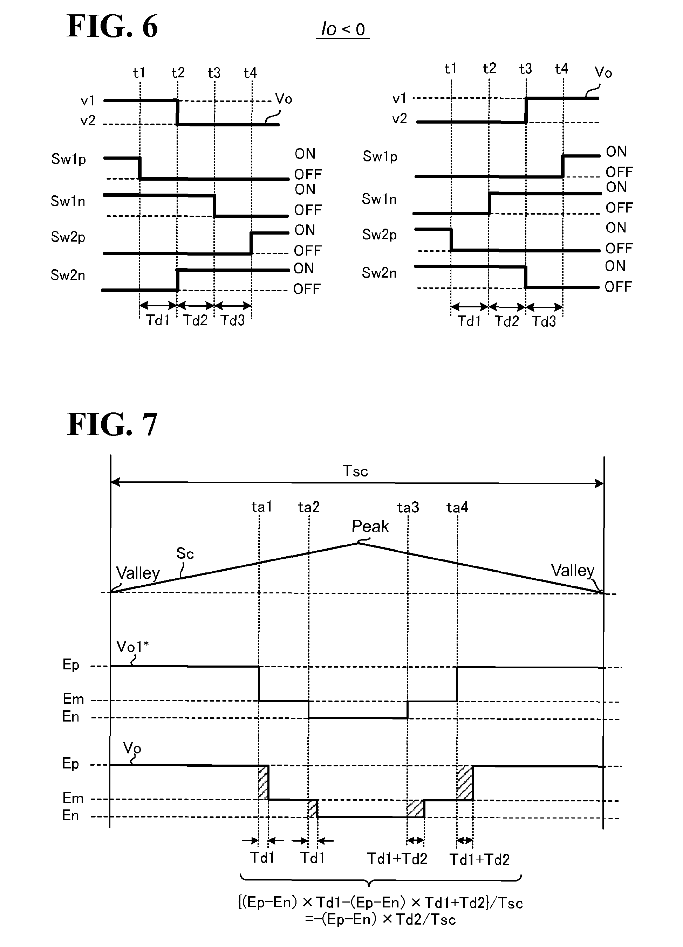

In contrast, in a case where $Io < 0$, the input phase voltage $Vi$ output to the output phase changes at different timings from the timings in the case where $Io > 0$. FIG. 6 illustrates graphs of ON-OFF transitions of switching elements in the case where $Io < 0$ in the four-step current commutation.

As illustrated in FIG. 6, in the case where $Io < 0$ and the input phase voltage $Vi$ changes from $v1$ to $v2$, the output phase voltage $Vo$ changes at the timing (timing $t2$) of the second step. Alternatively, in the case where $Io < 0$ and the input phase voltage $Vi$ changes from $v2$ to $v1$, the output phase voltage $Vo$ changes at the timing (timing $t3$) of the third step.

FIG. 7 illustrates a graph of the PWM control command $Vo1^*$, the output phase voltage $Vo$, and the carrier wave Sc in relation to each other in a case where $Io < 0$ in the four-step current commutation. As illustrated in FIG. 7, in the case where $Io < 0$, similarly to the case where $Io > 0$, the output phase voltage $Vo$ does not change at the switching timing of the input phase voltage $Vi$ specified by the PWM control command $Vo1^*$.

Specifically, the output phase voltage $Vo$ changes at the timing ($Td1$) of the second step past timing $ta1$ and timing $ta2$. The output phase voltage $Vo$ changes at the timing ($Td1 + Td2$) of the third step past timing $ta3$ and timing $ta4$. Consequently, in one cycle $Tsc$ of the carrier wave Sc, an error of "$-(Ep - En)$ x $Td2 / Tsc$" is generated in the output phase voltage $Vo$ with respect to the PWM control command $Vo1^*$.

In this manner, in the commutation control using the current commutation, the timing at which the output phase voltage $Vo$ changes varies depending on whether the voltage increases ($v2 \rightarrow v1$) or the voltage decreases ($v1 \rightarrow v2$). The variation causes an error (hereinafter referred to as output voltage error $Voerr$) in the output phase voltage $Vo$ with respect to the PWM control command $Vo1^*$. Also, the polarity of the output voltage error $Voerr$ depends on the polarity of the output phase current $Io$. It is noted that although the four-step current commutation has been described so far, an output voltage error *Voerr* is also generated in any other commutation performed by the commutation controller 23.

While performing the commutation control using the current commutation, the commutation controller 23 may occasionally be instructed by the PWM control command *Vo1\** to perform the next commutation control. In this case, it is possible for the commutation controller 23 to perform the next commutation control in the middle of the commutation control in progress. When the commutation controller 23 performs the next commutation control in the middle of the commutation control in progress, the commutation controller 23 performs, for example, a transfer step for turning on one unidirectional switch constituting a switching-destination bidirectional switch Sw in the next commutation control. This configuration eliminates or minimizes a commutation failure such as opening of the output phases, and ensures accurate transfer between the commutation control operations. In the following description, the processing for performing the next commutation control in the middle of the commutation control in progress will be occasionally referred to as commutation skip processing.

4. PWM Calculator 22

The PWM calculator 22 calculates a duty ratio of the PWM control using either a space vector method or a carrier comparison method. Based on a result of the calculation, the PWM calculator 22 generates PWM control commands *Vu1\*, Vv1\*,* and *Vw1\*.*

An example of the PWM calculator 22 generating the PWM control commands *Vu1\*, Vv1\*,* and *Vw1\** using the space vector method will now be described. As illustrated in FIG. 3, the PWM calculator 22 includes a duty ratio calculator 41 (which is an example of the command generator), an error compensator 42, and a duty ratio adjustor 43.

Based on values including the input phase voltages *Er, Es,* and *Et,* the output voltage commands *Vu\*, Vv\*,* and *Vw\*,* and input current commands *Ir\*, Is\*,* and *It\*,* the duty ratio calculator 41 calculates an output vector ratio indicating the duty ratio of the PWM control in every half-cycle of the carrier wave Sc using the space vector method. The calculation using the space vector method may be based on the conventional, known technique disclosed in WO 2006/118026, for example.

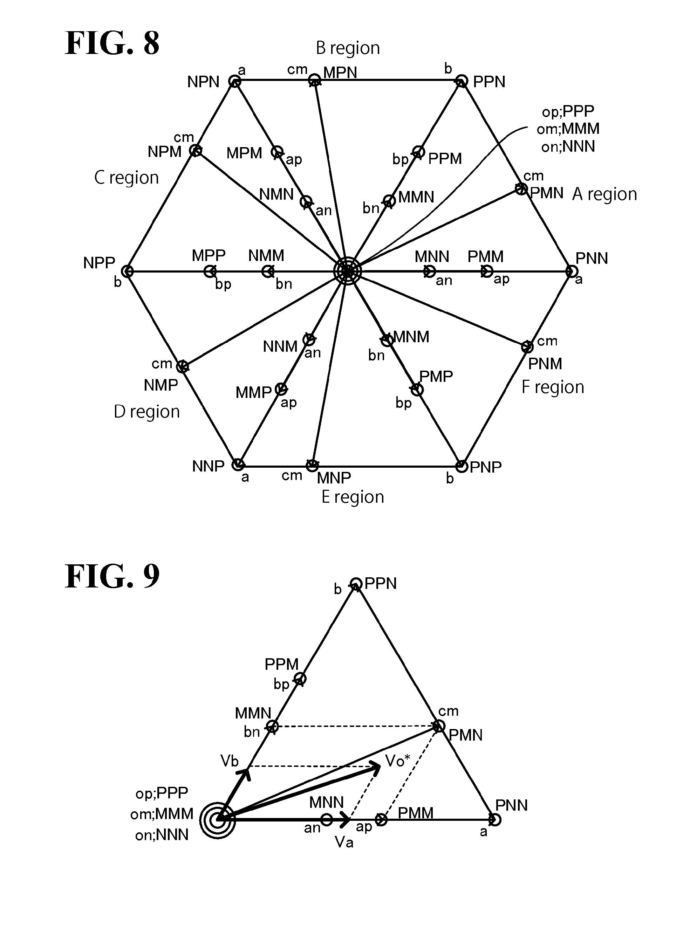

The space vector method will now be described. For the R phase, the S phase, and the T phase of the AC power source 2, assume that the maximum voltage phase is represented by *P,* the minimum voltage phase is represented by *N,* and the intermediate voltage phase is represented by *M.* In this case, the space vectors of the output voltages can be represented as in FIG. 8. FIG. 8 is a diagram illustrating exemplary space vectors of the output voltages.

Referring to FIG. 8, "*a*-vector" is a vector term indicating a state in which one of the output phases, namely, the *U* phase, the *V* phase, and the *W* phase, is connected to the maximum voltage phase *P,* and in which the rest of the output phases are connected to the minimum voltage phase *N.* "*b*-vector" represents a state in which one of the output phases is connected to the minimum voltage phase *N,* and in which the rest of the output phases are connected to the maximum voltage phase *P.* Among the output voltage commands *Vu\*, Vv\*,* and *Vw\*,* the maximum value is represented by *Vmax,* the intermediate value is represented by *Vmid,* and the minimum value is represented by *Vmin.* When the output phase of the maximum value *Vmax* is connected to the maximum voltage phase *P,* the output phase of the intermediate value *Vmid* is connected to the minimum voltage phase *N,* and the output phase of the minimum value *Vmin* is connected to the minimum voltage phase *N,* this state is represented by "PNN", which is an "*a*-vector". Similarly, "NPN" and "NNP" are "*a*-vectors". "PPN", "PNP", and "NPP" are "*b*-vectors".

As used herein, "*ap*-vector", "*an*-vector", "*bp*-vector", and "*bn*-vector" indicate states in which at least one of the output phases is connected to the intermediate voltage phase *M.* "*cm*-vectors" indicate states in which the *U* phase, the *V* phase, and the *W* phase are each connected to a different input phase. "*on*-vector", "*om*-vector", and "*op*-vector" indicate states in which the *U* phase, the *V* phase, and the *W* phase are all connected to an identical input phase.

FIG. 9 is a diagram illustrating an example of correspondence between an output voltage command *Vo\** and space vectors. As illustrated in FIG. 9, the PWM calculator 22 uses a switching pattern of a combination of a plurality of output vectors to turn an "*a*-vector component *Va"* and a "*b*-vector component *Vb"* of the output voltage command *Vo\** into the PWM control commands *Vu1\*, Vv1\*,* and *Vw1\*.* Then, the PWM calculator 22 outputs the PWM control commands *Vu1\*, Vv1\*,* and *Vw1\*.*

The duty ratio calculator 41 regards the input phase voltages *Er, Es,* and *Et* as input phase voltages *Ep, Em,* and *En* in descending order of magnitude. Among the output voltage commands *Vu\*, Vv\*,* and *Vw\*,* the duty ratio calculator 41 regards the maximum value as *Vmax,* the intermediate value as *Vmid,* and the minimum value as *Vmin.* Then, the duty ratio calculator 41 calculates the *a*-vector component *Va* and the *b*-vector component *Vb* based on the following Formulae (1) and (2), for example:

$$|Va| = Vmax - Vmid \dots (1)$$

$$|Vb| = Vmid - Vmin \; ... \; (2)$$

The duty ratio calculator 41 regards the input phase voltage $Vi$, which has the largest absolute value among the input phase voltages $Er$, $Es$, and $Et$, as a reference voltage $Ebase$. When the reference voltage $Ebase$ is $Ep$, the duty ratio calculator 41 calculates a current division ratio $\alpha$ based on the following Formula (3), for example. When the reference voltage $Ebase$ is $En$, the duty ratio calculator 41 calculates the current division ratio $\alpha$ based on the following Formula (4), for example. In the following Formulae (3) and (4), among the input current commands $Ir^*$, $Is^*$, and $It^*$, current command values of the phases corresponding to the input phase voltages $Ep$, $Em$, and $En$ are respectively represented by $Ip$, $Im$, and $In$:

$$\alpha = Im \, / \, In \; ... \; (3)$$

$$\alpha = Im \, / \, Ip \; ... \; (4)$$

In an input power control section (not illustrated) of the controller 20, the input current commands $Ir^*$, $Is^*$, and $It^*$ are generated based on, for example, a positive-phase-sequence component voltage, a negative-phase-sequence component voltage, and a set power factor command. The input current commands $Ir^*$, $Is^*$, and $It^*$ cancel the influence of imbalance voltage and also control the power factor of the input current at a desired value.

The duty ratio calculator 41 selects one switching pattern from among a plurality of switching patterns. The following Table 1 shows exemplary switching patterns. For example, based on whether the reference voltage $Ebase$ is the input phase voltage $Ep$ or $En$, and based on whether $|Vb| - \alpha |Va| \geq 0$ is satisfied, the duty ratio calculator 41 selects one switching pattern from among the switching patterns shown in Table 1. The duty ratio calculator 41 calculates a ratio of each of the output vectors constituting the selected switching pattern based on the output voltage commands $Vu^*$, $Vv^*$, and $Vw^*$.

Table 1

| Condition | Switching Pattern | | Pattern Number |
|---|---|---|---|
| | Carrier Half-Cycle (Valley $\rightarrow$ Peak) | Carrier Half-Cycle (Peak $\rightarrow$ Valley) | |
| $Ebase \geq 0$, $|Vb| - \alpha|Va| \geq 0$ | $op \rightarrow bp \rightarrow b \rightarrow cm \rightarrow a$ | $a \rightarrow cm \rightarrow b \rightarrow bp \rightarrow op$ | 1 |
| $Ebase \geq 0$, $|Vb| - \alpha|Va| < 0$ | $op \rightarrow bp \rightarrow ap \rightarrow cm \rightarrow a$ | $a \rightarrow cm \rightarrow ap \rightarrow bp \rightarrow op$ | 2 |
| $Ebase < 0$, $Vb| - \alpha|Va | \geq 0$ | $b \rightarrow cm \rightarrow a \rightarrow an \rightarrow on$ | $on \rightarrow an \rightarrow a \rightarrow cm \rightarrow b$ | 3 |
| $Ebase < 0$, $Vb| - \alpha|Va | < 0$ | $a \rightarrow cm \rightarrow bn \rightarrow an \rightarrow on$ | $on \rightarrow an \rightarrow bn \rightarrow cm \rightarrow a$ | 4 |

The error compensator 42 calculates a compensation amount for compensating for the output voltage error $Voerr$. The error compensator 42 includes a compensation amount calculator 44 and a compensation amount adjustor 45. Based on, for example, the polarity of the output phase current $Io$, commutation periods of time $Td1$ and $Td2$, and the number of peaks and valleys of the carrier wave Sc in a correction amount calculation cycle $7c$, the compensation amount calculator 44 calculates a compensation amount $Tcp(max)$, a compensation amount $Tcp(mid)$, and a compensation amount $Tcp(min)$.

$Tcp(max)$ is a compensation amount with respect to the maximum output voltage phase, $Tcp(mid)$ is a compensation amount with respect to the intermediate output voltage phase, and $Tcp(min)$ is a compensation amount with respect to the minimum output voltage phase. The maximum output voltage phase is an output phase corresponding to $Vmax$, the intermediate output voltage phase is an output phase corresponding to $Vmid$, and the minimum output voltage phase is an output phase corresponding to $Vmin$. In the following description, $Tcp(max)$, $Tcp(mid)$, and $Tcp(min)$ will be collectively referred to as $Tcp(o)$. The number of peaks, the number of valleys, and the number of peaks and valleys of the carrier wave Sc in the correction amount calculation cycle $Tc$ will be respectively referred to as $Cy$, $Ct$, and $Cyt$. It is noted that when a period from a valley to a peak is the correction amount calculation cycle *Tc,* then *Ct* = 1, and *Cyt* = 1. When a period from a peak to a valley is the correction amount calculation cycle *Tc,* then *Cy* = 1, and *Cyt* = 1.

The correction amount calculation cycle *Tc* is equal to the calculation cycle of the output voltage command *Vo\** calculated by the command outputter 21. This configuration ensures that the compensation amount *Tcp(o)* is calculated in every calculation cycle of the output voltage command *Vo\**. This improves accuracy of the compensation amount *Tcp(o).* It is noted that the correction amount calculation cycle *Tc* may be 1 / *n* (*n* is a natural number) of the calculation cycle of the output voltage command *Vo\**.

When the current commutation is employed and when the polarity of the output phase current *Io* is positive, or when the voltage commutation is employed and when the polarity of the output phase current *Io* is not positive, the compensation amount calculator 44 calculates the compensation amount *Tcp(o)* using the following Formula (5), for example:

[Mathematical Formula 1]

$$Tcp(o) = \frac{(Td1 + Td2) \cdot Ct - Td1 \cdot Cy}{Cyt} \qquad \cdots (5)$$

When the current commutation is employed and when the polarity of the output phase current *Io* is not positive, or when the voltage commutation is employed and when the polarity of the output phase current *Io* is positive, the compensation amount calculator 44 calculates the compensation amount *Tcp(o)* using the following Formula (6), for example:

[Mathematical Formula 2]

$$Tcp(o) = \frac{Td1 \cdot Ct - (Td1 + Td2) \cdot Cy}{Cyt} \qquad \cdots (6)$$

When the compensation amount *Tcp(o)* is set, and when, for example, an instantaneous voltage of the input phase is low, then an overcompensation may occur with respect to the output voltage error *Voerr.* For example, an overcompensation may occur when the above-described commutation skip processing is performed or when the output vector ratio is so small that it is impossible to output to the output phase an input phase voltage *Vi* that accords with the output vector.

The overcompensation may cause, for example, current ripples to increase each having a component six times the output frequency. The increased current ripples may cause the output property to degrade. In view of the possible degradation, based on the input phase voltages *Er, Es,* and *Et,* the compensation amount adjustor 45 adjusts the compensation amount *Tcp(o)* calculated by the compensation amount calculator 44.

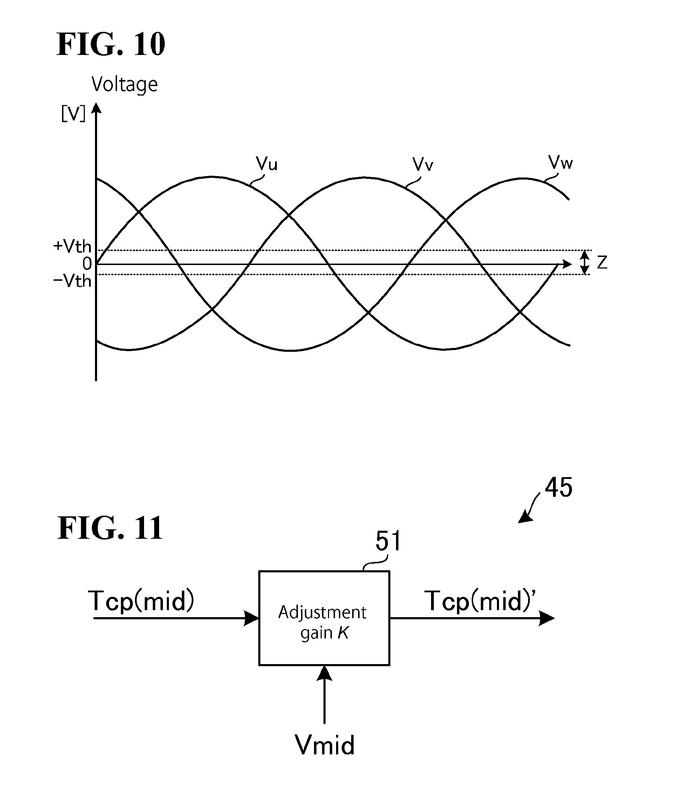

For example, when the intermediate voltage among the plurality of output phase voltages *Vu, Vv,* and *Vw* is within a predetermined range *Z,* which includes zero, the compensation amount adjustor 45 decreases the compensation amount in accordance with the intermediate voltage. As illustrated in FIG. 10, the predetermined range *Z* is a range in which the output phase voltages *Vu, Vv,* and *Vw* are from +*Vth* to -*Vth.* FIG. 10 illustrates a graph of the range within which the compensation amount *Tcp(o)* is decreased.

The output phase voltages *Vu, Vv,* and *Vw* are respectively generated based on the output voltage commands *Vu\*, Vv\*,* and *Vw\**. Consequently, when the intermediate value *Vmid* (hereinafter referred to as intermediate output phase voltage *Vmid*) among the output voltage commands *Vu\*, Vv\*,* and *Vw\** is within the predetermined range *Z,* the compensation amount adjustor 45 decreases the compensation amount *Tcp(o)* in accordance with the intermediate voltage. The compensation amount adjustor 45 is also capable of determining whether the intermediate output phase voltage *Vmid* is within the predetermined range *Z* based on the phase of one of the output voltage commands *Vu\*, Vv\*,* and *Vw\**.

For example, when the intermediate output phase voltage *Vmid* is within the predetermined range *Z,* the compensation amount adjustor 45 adjusts the compensation amount *Tcp(mid)* with respect to the intermediate output phase voltage *Vmid.*

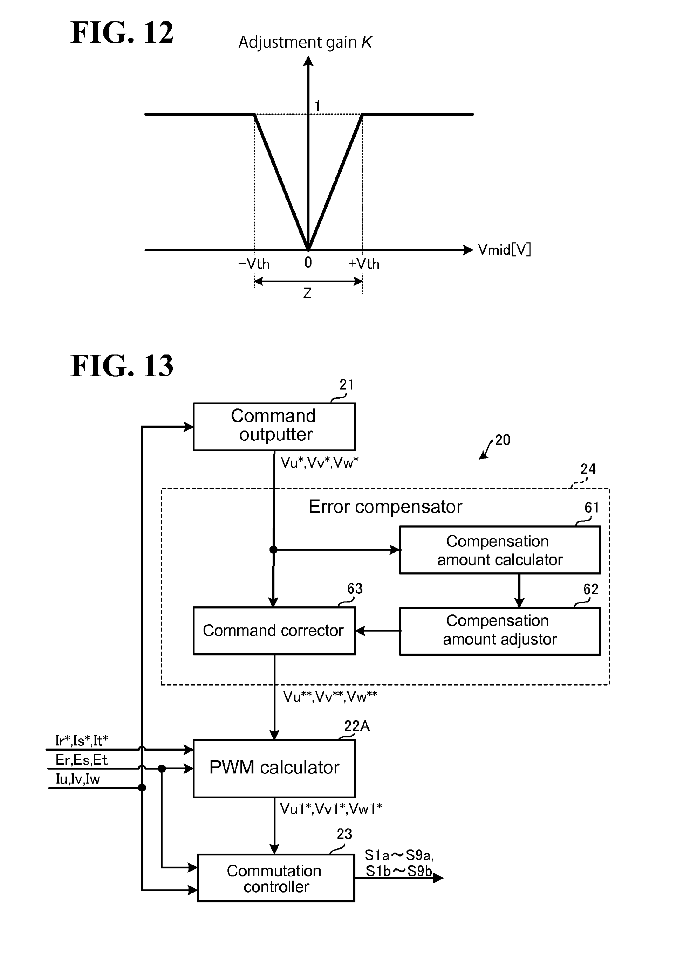

FIG. 11 is a diagram illustrating an exemplary configuration of the compensation amount adjustor 45. FIG. 12 illustrates a graph of the intermediate output phase voltage *Vmid* and an adjustment gain in relation to each other. As illustrated in FIG. 11, the compensation amount adjustor 45 includes a multiplier 51. The multiplier 51 multiplies the compensation amount *Tcp(mid)* by an adjustment gain *K.* As illustrated in FIG. 12, the adjustment gain *K* decreases as the intermediate output phase voltage *Vmid* decreases within the predetermined range *Z,* and the adjustment gain *K* is "1" when the intermediate output phase voltage *Vmid* is outside the predetermined range *Z.* In FIG. 11, the compensation amount *Tcp(mid)* multiplied by the adjustment gain *K* is indicated as a compensation amount *Tcp(mid)'*.

Thus, when the intermediate output phase voltage *Vmid* is within the predetermined range *Z,* the compensation amount adjustor 45 is capable of decreasing the adjustment gain *K* with respect to the compensation amount *Tcp(mid)* of the intermediate output phase voltage *Vmid* as the intermediate output phase voltage *Vmid* decreases. That is, the compensation amount adjustor 45 is capable of increasing the rate of decreasing the compensation amount *Tcp(mid)* as the intermediate output phase voltage *Vmid* decreases.

Thus, when the intermediate output phase voltage *Vmid* is low, the compensation amount *Tcp(mid)* is decreased. This configuration eliminates or minimizes overcompensation. With no or minimal overcompensation, the accuracy of the output property of the matrix convertor improves.

The adjustment gain *K* illustrated in FIG. 12 decreases in proportion to the intermediate output phase voltage *Vmid* within the predetermined range *Z.* The adjustment gain *K,* however, will not be limited to the example illustrated in FIG. 12. Another possible embodiment is that the adjustment gain *K* decreases at stages. Another possible embodiment is that the adjustment gain *K* has two stages within the predetermined range *Z.* While in the above-described embodiment the compensation amount *Tcp(mid)* is adjusted with the intermediate output phase voltage *Vmid* in focus, this embodiment should not be construed in a limiting sense. The compensation amount adjustor 45 may have any other configuration insofar as the compensation amount adjustor 45 adjusts the compensation amount *Tcp(o)* when an overcompensation occurs due to the state of the output phase voltage *Vo.*

Based on the compensation amount *Tcp(o),* the duty ratio adjustor 43 adjusts some of the output vector ratios calculated for the output phases. Then, based on the output vector ratios subjected to the adjustment, the duty ratio adjustor 43 generates the PWM control commands *Vu1\*, Vv1\*,* and *Vw1\*.* Then, the duty ratio adjustor 43 outputs the generated PWM control commands *Vu1\*, Vv1\*,* and *Vw1\** to the commutation controller 23.

The PWM calculator 22 includes the error compensator 42. In order to decrease the output voltage error *Voerr* caused by the commutation control, the error compensator 42 corrects the duty ratio of the PWM pulse obtained from the output voltage command *Vo\** to generate the PWM control command *Vo1\*.* The error compensator 42 includes the compensation amount calculator 44 and the compensation amount adjustor 45. The compensation amount calculator 44 calculates the compensation amount to decrease the error in the output voltage caused by the commutation control. The compensation amount adjustor 45 decreases the compensation amount based on the output phase voltage *Vo.* Consequently, the matrix convertor 1 according to this embodiment accurately eliminates or minimizes the output voltage error *Voerr* caused by the commutation control without correcting the output voltage command *Vo\*.* The matrix convertor 1 also eliminates or minimizes degradation of the output property of the matrix convertor caused by overcompensation.

In the above-described embodiment, the space vector method is used in the PWM calculator 22 to generate the PWM control command *Vo1\*.* Another possible embodiment is to use a triangular wave comparison method to generate the PWM control command *Vo1\*.*

In the case of the triangular wave comparison method as well, the PWM calculator 22 calculates the compensation amount *Tcp(o)* corresponding to the output voltage error *Voerr* caused by the commutation control, and decreases the compensation amount *Tcp(o)* based on the output phase voltage *Vo.* This configuration accurately eliminates or minimizes the output voltage error *Voerr* caused by the commutation control without correcting the output voltage commands *Vu\*, Vv\*,* and *Vw\*,* and eliminates or minimizes degradation of the output property of the matrix convertor caused by overcompensation.

In generating the PWM control command *Vo1\*,* the PWM calculator 22 may also select from the space vector method and the triangular wave comparison method based on information input by the user or installer through an inputting device (not illustrated) of the matrix convertor 1.

In the above description, the compensation amount *Tcp(o),* which is for compensating for the output vector ratio, is adjusted in accordance with the state of the output voltage. Another possible embodiment is illustrated in FIG. 13, where a compensation amount for compensating for the output phase voltage command *Vo\** is adjusted in accordance with the state of the output voltage. FIG. 13 is a diagram illustrating another exemplary configuration of the controller 20. The controller 20 illustrated in FIG. 13 includes a compensation amount calculator 61, a compensation amount adjustor 62, and a command corrector 63.

Similarly to the compensation amount calculator 44, the compensation amount calculator 61 calculates compensation amounts *Tcp(max), Tcp(mid),* and *Tcp(min).* The compensation amount calculator 61 further calculates voltage command compensation amounts *Vcp(max), Vcp(mid),* and *Vcp(min).* The voltage command compensation amounts *Vcp(max), Vcp(mid),* and *Vcp(min)* respectively correspond to the compensation amounts *Tcp(max), Tcp(mid),* and *Tcp(min).* For example, the compensation amount calculator 61 multiplies the compensation amounts *Tcp(max), Tcp(mid),* and *Tcp(min)* individually by (*Ep-En*) / *Tsc* to obtain the voltage command compensation amounts *Vcp(max), Vcp(mid),* and *Vcp(min).*

Similarly to the compensation amount adjustor 45, the compensation amount adjustor 62 multiplies the compensation amount *Vcp(mid)* by the adjustment gain K to adjust the compensation amount *Vcp(mid).* The command corrector 63 adds *Vcp(max)* to the output voltage command *Vo\** of the maximum value *Vmax,* adds *Vcp(mid)* obtained from the compensation amount adjustor 62 to the output voltage command *Vo\** of the intermediate value *Vmid,* and adds *Vcp(min)* to the output voltage command *Vo\** of the minimum value *Vmin.* The command corrector 63 regards the corrected output voltage commands, *Vo\*,* as output voltage commands *Vo* (*Vu\*\*, Vv\*\*,* and *Vw\*\**), and outputs the output voltage commands *Vo\*\** to the PWM calculator 22A.

The PWM calculators 22 and 22A may select from two-phase modulation and three-phase modulation, and generate the PWM control command *Vo1\** using the selected modulation. The two-phase modulation is a method of connecting one of the output phases to one of the input phases and modulating each of the rest of the output phases using all the three input phases. The three-phase modulation is a method of modulating each of all the output phases using all the input phases. In the case of the two-phase modulation, the error compensators 42 and 24 do not perform compensation with respect to the output phase to which PWM modulation is not performed. That is, in the case of the two-phase modulation, the error compensators 42 and 24 do not perform compensation with respect to the output voltage command *Vo\** of the maximum value *Vmax.*

5. Processing Flow

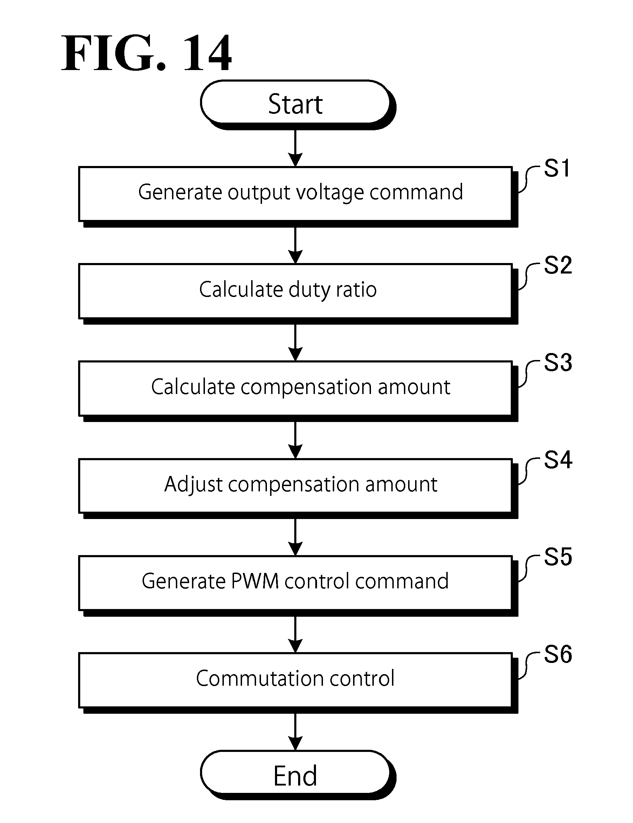

By referring to FIG. 14, an exemplary flow of power conversion processing performed by the controller 20 will now be described in detail below. FIG. 14 is a flowchart of the exemplary power conversion processing performed by the controller 20.

As illustrated in FIG. 14, the command outputter 21 of the controller 20 generates and outputs the output voltage commands *Vu\*, Vv\*,* and *Vw\** (step S1). Based on the output voltage commands *Vu\*, Vv\*,* and *Vw\**, the duty ratio calculator 41 of the PWM calculator 22 calculates output vector ratios specifying the duty ratio of the PWM control (step S2). The error compensator 42 of the PWM calculator 22 calculates a compensation amount for compensating for the output voltage error *Voerr* (step S3).

The compensation amount adjustor 45 of the PWM calculator 22 adjusts the compensation amount based on the states of the plurality of output phase voltages *Vu, Vv,* and *Vw* (step S4). For example, when the intermediate output phase voltage *Vmid* is within the predetermined range *Z,* which includes zero, the compensation amount adjustor 45 decreases the compensation amount in accordance with the intermediate output phase voltage *Vmid.*

Based on the compensation amount, the duty ratio adjustor 43 of the PWM calculator 22 adjusts some of the output vector ratios calculated by the duty ratio calculator 41. Then, based on the output vector ratios subjected to the adjustment, the duty ratio adjustor 43 generates the PWM control command *Vo1\** (step S5). When the PWM control command *Vo1\** is changed, the commutation controller 23 performs commutation control processing using predetermined commutation including one or more steps so as to generate a drive signal *Sg* (step S6).

As has been described heretofore, the matrix convertor 1 according to this embodiment adjusts the compensation amount based on the states of the plurality of output phase voltages *Vu, Vv,* and *Vw*. This configuration ensures appropriate adjustment of the compensation amount for compensating for the output voltage error *Voerr*. This eliminates or minimizes degradation of the output property of the matrix convertor.

Obviously, numerous modifications and variations of the present disclosure are possible in light of the above teachings. It is therefore to be understood that within the scope of the appended claims, the present disclosure may be practiced otherwise than as specifically described herein.

| | |
|---|---|
| 1 | Matrix convertor |
| 2 | AC power source |
| 3 | AC device |
| 10 | Power convertor |
| 11 | LC filter |
| 12 | Input voltage detector |
| 13 | Output current detector |
| 20 | Controller |
| 21 | Command outputter |
| 22, 22A | PWM calculator |
| 23 | Commutation controller |
| 31 | Current command generator |
| 41 | Duty ratio calculator |
| 24, 42 | Error compensator |
| 43 Duty | ratio adjustor |

| 44, 61 | Compensation amount calculator |
| 45, 62 | Compensation amount adjustor |
| 51 | Multiplier |
| 63 | Command corrector |
| Sw1 to Sw9 | Bidirectional switch |
| Swa, Swb | Switching element |

**Claims**

1. A matrix convertor (1), **characterized by**:

   a power convertor (10) disposed between a plurality of input phases (R, S, T) and a plurality of output phases (U, V, W) switchably connected to the plurality of input phases (R, S, T), the power convertor (10) comprising a plurality of bidirectional switches (Sw1 to Sw9) each comprising a plurality of switching elements (Swa, Swb);
   a commutation controller (23) configured to perform commutation control with respect to the plurality of switching elements (Swa, Swb) of each of the plurality of bidirectional switches (Sw1 to Sw9) using a commutation pattern comprising a plurality of steps so as to switch connection between the plurality of input phases (R, S, T) and the plurality of output phases (U, V, W) through the power convertor (10);
   an error compensator (24, 42) configured to calculate a compensation amount to decrease an error in an output voltage caused by the commutation control; and
   a compensation amount adjustor (45, 62) configured to decrease the compensation amount based on at least one voltage among voltages of the plurality of output phases (U, V, W).

2. The matrix convertor (1) according to claim 1,
   wherein the error compensator (24, 42) is configured to calculate the compensation amount for each of the plurality of output phases (U, V, W), and
   wherein when an intermediate voltage among the voltages of the plurality of output phases (U, V, W) is within a predetermined range comprising zero, the compensation amount adjustor (45, 62) is configured to decrease the compensation amount corresponding to the intermediate voltage.

3. The matrix convertor (1) according to claim 2, wherein the compensation amount adjustor (45, 62) is configured to increase a decrease rate of the compensation amount as the intermediate voltage decreases.

4. The matrix convertor (1) according to any one of claims 1 to 3, further comprising:

   a duty ratio calculator (41) configured to calculate a duty ratio of PWM control with respect to the power convertor (10); and
   a duty ratio adjustor (43) configured to, based on the compensation amount output from the compensation amount adjustor (45, 62), adjust the duty ratio and generate a PWM control command,
   wherein the commutation controller (23) is configured to perform the commutation control based on the PWM control command.

5. The matrix convertor (1) according to any one of claims 1 to 3, further comprising:

   a command outputter (21) configured to output an output voltage command;
   a command corrector (63) configured to correct the output voltage command based on the compensation amount; and
   a PWM calculator (22, 22A) configured to, based on the output voltage command corrected by the command corrector (63), calculate a control command for PWM control with respect to the power convertor (10).

6. A power generation system, **characterized by**:

   a power generator (3) configured to generate power; and
   the matrix convertor (1) according to any one of claims 1 to 5 connected to the power generator (3) to output the power to a power system (2).

7. A method for converting power, **characterized by**:

when connection between a plurality of input phases (R, S, T) and a plurality of output phases (U, V, W) is switched through a power convertor (10) comprising a plurality of bidirectional switches (Sw1 to Sw9) disposed between the plurality of input phases (R, S, T) and the plurality of output phases (U, V, W), performing commutation control of controlling switching elements (Swa, Swb) of the plurality of bidirectional switches (Sw1 to Sw9) using a commutation pattern comprising a plurality of steps;

calculating a compensation amount to decrease an error in an output voltage caused by the commutation control; and

decreasing the compensation amount based on at least one voltage among voltages of the plurality of output phases (U, V, W).

# FIG. 1

# FIG. 2

# FIG. 3

# FIG. 4

*Io > 0*

# FIG. 5

$$\{(Ep-En) \times Td1+Td2-(Ep-En) \times Td1\}/Tsc$$
$$=(Ep-En) \times Td2/Tsc$$

# FIG. 6

$Io < 0$

# FIG. 7

$$\{(Ep-En) \times Td1-(Ep-En) \times Td1+Td2\}/Tsc$$
$$=-(Ep-En) \times Td2/Tsc$$

**FIG. 8**

**FIG. 9**

# FIG. 10

Voltage
[V]

Vu          Vv          Vw

+Vth
0
−Vth

Z

# FIG. 11

45

51

Tcp(mid) → | Adjustment gain *K* | → Tcp(mid)'

Vmid

# FIG. 12

Adjustment gain $K$

# FIG. 13

# FIG. 14

```
                    ┌─────────────────┐
                    │      Start      │
                    └─────────────────┘
                             │
                             ▼
        ┌──────────────────────────────────────┐  ⌐S1
        │     Generate output voltage command   │
        └──────────────────────────────────────┘
                             │
                             ▼
        ┌──────────────────────────────────────┐  ⌐S2
        │          Calculate duty ratio          │
        └──────────────────────────────────────┘
                             │
                             ▼
        ┌──────────────────────────────────────┐  ⌐S3
        │      Calculate compensation amount     │
        └──────────────────────────────────────┘
                             │
                             ▼
        ┌──────────────────────────────────────┐  ⌐S4
        │       Adjust compensation amount       │
        └──────────────────────────────────────┘
                             │
                             ▼
        ┌──────────────────────────────────────┐  ⌐S5
        │      Generate PWM control command      │
        └──────────────────────────────────────┘
                             │
                             ▼
        ┌──────────────────────────────────────┐  ⌐S6
        │          Commutation control           │
        └──────────────────────────────────────┘
                             │
                             ▼
                    ┌─────────────────┐
                    │       End       │
                    └─────────────────┘
```

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004007929 A
- JP 2007082286 A

- WO 2006118026 A